# EUROPÄISCHE PATENTSCHRIFT

(11) **EP 1 903 135 B1**
(45) Veröffentlichungstag und Bekanntmachung des Hinweises auf die Patenterteilung: **29.05.2013**
(21) Anmeldenummer: 07017258.0
(22) Anmeldetag: 04.09.2007
(51) Int. Cl.: B32B 5/26, B32B 7/08, D04H 1/541, D04H 1/498, D04H 1/485, D04H 13/00

(54) **Mehrlagiges Vliesverbundmaterial und Verfahren zur Herstellung eines mehrlagigen Vliesverbundmaterials**
Multi-layer non-woven composite material and method for manufacturing a multi-layer non-woven composite material
Matière composite multicouche et procédé de fabrication d'une matière composite multicouche

(30) Priorität: 21.09.2006 DE 102006045069
(43) Veröffentlichungstag der Anmeldung: 26.03.2008
(73) Patentinhaber: Sandler AG, 95126 Schwarzenbach/Saale (DE)
(72) Erfinder:

(56) Entgegenhaltungen:
- DE-A1- 4 339 709
- DE-A1- 10 007 556
- US-A- 6 133 171

## Beschreibung

Die Erfindung betrifft ein mehrlagiges Vliesverbundmaterial mit einer Kernschicht und mindestens einer mit der Kernschicht verbundenen Deckschicht, wobei die mindestens eine Deckschicht mit der Kernschicht vernadelt ist, so dass Fasern der mindestens einen Deckschicht in die Kernschicht ragen.

Solche Verbundmaterialien können für die Innenausstattung von Fahrzeugen eingesetzt werden, beispielsweise bei der Herstellung von automobilen Dachhimmeln. Der prinzipielle Aufbau des Verbundmaterials kann dabei folgendermaßen aussehen:
Auf der dem Fahrzeugdach zugewandten Seite des Verbundmaterials ist eine Lage bzw. eine Abdeckschicht aus organisch-synthetischen Fasern, Naturfasern oder Glasfasern angeordnet. Auf diese Abdeckschicht Ist eine Klebefolie oder ein Klebstoff in Pulverform aufgebracht, mit dem die Abdeckschicht mit einer Versteifungsschicht verbunden wird. Die Versteifungsschicht kann beispielsweise aus Schaumstoff, organisch-synthetischen Fasern, Naturfasern oder Glasfasern bestehen. Auf diese Versteifungsschicht ist wiederum eine Klebefolie oder ein Klebstoff in Pulverform aufgebracht, mit dem eine zweite Abdeckschicht, die zum Fahrzeuginnenraum weist, mit der Versteifungsschicht verbunden Ist. Die Abdeckschicht kann ebenfalls aus organisch-synthetischen Fasern, Naturfasern oder Glasfasern bestehen und ist zumeist mit einer Dekorschicht abgedeckt.

Weitere Verbundmaterialien für die Herstellung von automobilen Dachhimmeln sind bereits im Stand der Technik beschrieben. So ist beispielsweise aus der DE 697 17 662 T2 ein Verbundmaterial für die Innenverkleidung von Fahrzeugdecken bekannt, das aus drei übereinander angeordneten Schichten besteht. Alle drei Schichten bestehen aus kurzen, heiß schmelzenden Polyesterfasern mit niedrigem Schmelzpunkt, wobei die Zwischenschicht im Verhältnis zu den äußeren Schichten eine erheblich größere Dicke aufweist und Polyesterfasern mit einem niedrigeren Schmelzpunkt enthält. Die Zwischenschicht und die äußeren Schichten werden mittels eines Vorerwärmungsprozesses, in dem die Polyesterfasern schmelzen, untereinander verbunden. Auf die miteinander verbundenen Schichten kann eine Dekorschicht aufgebracht werden.

Ein weiteres Faservliesverbundelement ist aus der DE 103 19 967 A1 bekannt. Das Faservliesverbundelement besteht aus einem Mischfaservlies, das Thermoplastfasern und höher schmelzende Verstärkungsfasern enthält. Das Mischfaservlies kann vorzugsweise durch Nadeln verfestigt werden. Auf einer oder auf beiden Seiten des Mischfaservlieses ist eine Verbundfolie vorgesehen, die sich aus einer Schicht eines höher schmelzenden thermoplastischen Kunststoffs und aus einer Schicht eines niedriger schmelzenden thermoplastischen Kunststoffs zusammensetzt. Die Schicht des niedriger schmelzenden thermoplastischen Kunststoffs ist dabei dem Mischfaservlies zugewandt. Um Mischfaservlies und Verbundfolien miteinander zu verbinden, werden sie durch eine Wärmequelle auf eine Temperatur oberhalb des Schmelzpunkts der Thermoplastfasern des Mischfaservlieses und des niedriger schmelzenden Thermoplasts der Verbundfolie erhitzt, so dass diese miteinander verkleben.

Auch in der DE 102 97 710 T5 wird ein faserverstärkter Verbundwerkstoff bzw. ein Verfahren zur Herstellung eines solchen Verbundwerkstoffs beschrieben. Der Verbundwerkstoff umfasst eine Verbundmatte, die thermoplastische Fasern und Verstärkungsfasern aufweist, die miteinander vernadelt sind. Die Verbundmatte wird erwärmt, so dass die thermoplastischen Fasern schmelzen, und komprimiert, so dass eine Verbundfolie entsteht. Nach der Kompression wird die Verbundfolie wieder erhitzt, wodurch aufgrund der Eigenelastizität der Verstärkungsfasern eine pseudoverschäumte Verbundfolie entsteht.

Weiterhin ist aus der DE 100 07 556 A1 bekannt, die Trägerkomponente für Formteile, wie Dachhimmel oder Innenausstattungsteile für Fahrzeuge, aus einem genadelten Vliesstoff herzustellen. Die Vernadelung des Vliesstoffs erfolgt dabei so, dass 50 % der Nadeleinstiche mindestens 60 % der Dicke des Vliesstoffs, diesen jedoch nicht komplett durchdringen.

Auch in der DE 43 39 709 wird ein mehrlagiges Nodeluliess bekannt, die aus einem Festigkeitsträger mit hoher Festigkeit und geringer Dehnung und aus zumindest einer Stapelfaserlage besteht, welche durch Nodeln mit dem Festigkeitsträger verbunden ist.

Diese aus dem Stand der Technik bekannten Verbundmaterialien weisen allerdings eine Reihe von Nachteilen auf. Über Klebstoff miteinander verbundene Materialmischungen, die eventuell auch noch Glasfasern zur zusätzlichen Versteifung aufweisen, sind in der Regel nicht oder nur schwer recycelbar. Abhängig von den eingesetzten Rohmaterialien können Schadstoffemissionen in den Innenraum des Fahrzeugs auftreten. Zudem kann beobachtet werden, dass ein Wärmedurchhang auftritt. Beim Einsatz von Duroplast-Materialien können schlechte akustische Eigenschaften beobachtet werden. Dies kann durch den Einsatz von vernadelten Vliesmaterialien verbessert werden, diese weisen aber in der Regel eine sehr geringe Steifigkeit auf.

Es ist daher die Aufgabe der vorliegenden Erfindung, ein Vliesverbundmaterial bereitzustellen, das nach dem Verpressvorgang eigensteif ist, einen polymereinheitlichen Aufbau aufweist und daher für den Einsatz als Innenraumverkleidung von Fahrzeugen geeignet ist. Bei der Herstellung dieses Materials soll der Einsatz von duroplastischen Materialien und Glas vermieden werden, um ausreichende Akustikeigenschaften für die Schalldämpfung zu erreichen. Zudem soll das Material keinen Wärmedurchhang aufweisen. Die Abgabe von Emissionen in Form von Fogging oder Geruchsabgabe in den Fahrzeuginnenraum sollte vermieden werden. Das Vliesverbundmaterial sollte gute mechanische Stabilität, Biegesteifigkeit, Zugfestigkeit und Schlagzähigkeit aufweisen und günstig in der Herstellung sein. Weiterhin sollte das Material gute Verarbeitungseigenschaften bei der Herstellung der Innenraumverkleidung, wie z.B. eine gute Verformbarkeit im Werkzeug, aufweisen.

Hierzu ist erfindungsgemäß vorgesehen, dass die Deckschicht sowie die aus der Deckschicht in die Kernschicht ragenden Fasern zumindest teilweise stoffschlüssig mit der Kernschicht verbunden sind, wobei die Kernschicht amorphe Bikomponentenfasem mit einer niedriger schmelzenden Komponente und einer höher schmelzenden Komponente enthält und die mindestens eine Deckschicht kristalline Bikomponentenfasem mit einer niedriger schmelzenden Komponente und einer höher schmelzenden Komponente enthält.

Dieses mehrlagige Vliesverbundmaterial zeichnet sich durch eine gute Verbindung der Kernschicht mit der mindestens einen Deckschicht aus, da die Verbindung zwischen der Kernschicht und der mindestens einen Deckschicht nicht nur an der Oberfläche zwischen Kernschicht und Deckschicht erfolgt, sondern auch zwischen den in die Kernschicht ragenden Fasern und der Kernschicht. Dadurch wird eine dreidimensionale Verbindung der Kernschicht und der Deckschicht erzielt, also sowohl entlang der Verbindungsfläche zwischen Kernschicht und Deckschicht als auch quer zu dieser Verbindungsfläche. Da Faserbündel aus der Deckschicht in die Kernschicht ragen, wird eine schubsteife Verbindung ermöglicht. Das mehrlagige Vliesverbundmaterial kann daher Zug- und Druckbelastungen aufnehmen.

Bei den in der Kernschicht und in der mindestens einen Deckschicht enthaltenen Bikomponentenfasem kann es sich um Bikomponentenfasem mit einer Kern-Mantel-Struktur handeln. Dabei ist die höher schmelzende Komponente im Kern der Bikomponentenfaser angeordnet und wird von der niedriger schmelzenden Komponente umhüllt. Es ist aber auch denkbar, Seite-an-Seite-Bikomponentenfasem einzusetzen. In diesem Fall sind die höher schmelzende Komponente und die niedriger schmelzende Komponente in der Faser nebeneinander angeordnet.

Durch den Einsatz unterschiedlich strukturierter Bikomponentenfasem, d.h. amorpher und kristalliner Bikomponentenfasem, können die gewünschten Eigenschaften des Verbundmaterials eingestellt werden. Die kristallinen Bikomponentenfasem sorgen dafür, dass das Vliesverbundmaterial die gewünschte Stabilität aufweist, die elastischen bzw. Dämpf-Eigenschaften werden über die amorphen Bikomponentenfasem erreicht. Da die kristallinen Bikomponentenfasern in der mindestens einen Deckschicht enthalten sind, zeichnet sich das Vliesverbundmaterial durch eine härtere Hülle aus, die einen weicheren Kern aus amorphen Bikomponentenfasern enthält. Da kristalline Fasern in die Kernschicht hinein ragen, wird zudem eine Versteifung der weicheren Kernschicht erzielt.

In einer bevorzugten Ausführungsform ist vorgesehen, dass auf beiden Seiten der Kernschicht mindestens eine Deckschicht angeordnet ist. Auf diese Weise wird ein stabiler Sandwichverbund erhalten, in dem an beiden Seiten der weichen Kernschicht aus amorphen Bikomponentenfasern mindestens eine stabile Deckschicht aus kristallinen Bikomponentenfasem angeordnet ist. Da von beiden Seiten aus den Deckschichten Fasern in die Kernschicht ragen, wird die Schubsteifigkeit des Vliesverbundmaterials nochmals verbessert.

Gemäß einer besonders bevorzugten Ausführungsweise kann vorgesehen werden, dass die stoffschlüssige Verbindung zwischen der Kernschicht und der mindestens einen Deckschicht sowie den aus der mindestens einen Deckschicht in die Kernschicht ragenden Fasern durch eine Wärmebehandlung entsteht. Die miteinander vernadelten Schichten werden dabei auf eine Temperatur erwärmt, die ausreichend hoch ist, um sowohl die niedriger schmelzende Komponente der amorphen Bikomponentenfasem, als auch die niedriger schmelzende Komponente der kristallinen Bikomponentenfasem zum Schmelzen zu bringen. Die Kerne der amorphen und der kristallinen Bikomponentenfasern bleiben bei dieser Temperatur stabil. Die geschmolzenen Hüllen der Bikomponentenfasem verbinden sich dann mit benachbarten Fasern, so dass eine gerüstartige Struktur des Vliesverbundmaterials entsteht.

Besonders bevorzugt ist, wenn die niedriger schmelzenden Komponenten der Bikomponentenfasem benachbarte Fasern der Kernschicht und/oder der mindestens einen Deckschicht zumindest teilweise umhüllen. Die durch die Wärmebehandlung aufgeschmolzene niedriger schmelzende Komponente der Bikomponentenfasem legt sich um benachbarte Fasern, so dass eine feste Verbindung ohne zusätzliche Komponenten, wie beispielsweise Klebstoff entsteht. Da die höher schmelzende Komponente der Bikomponentenfasem festbleibt, bleibt die Netzstruktur des Vlieses erhalten.

In einer Variante kann vorgesehen werden, dass die Dicke der Kernschicht größer ist als die Dicke der mindestens einen Deckschicht. Auf diese Weise werden die gewünschten schalldämmenden Eigenschaften des Vliesmaterials verbessert und die gewünschte Dicke des Vliesmaterials eingestellt.

Weiterhin kann vorgesehen werden, dass das Flächengewicht der Kernschicht größer ist als das Flächengewicht der mindestens einen Deckschicht. Über Variationen der Flächengewichte kann die gewünschte Dicke des Verbundmaterials eingestellt werden.

Es hat sich als sehr vorteilhaft erwiesen, wenn das Raumgewicht der Kernschicht geringer ist als das Raumgewicht der mindestens einen Deckschicht. Die Kernschicht ist dann weniger kompakt als die Deckschicht und weist die gewünschten dämmenden Eigenschaften auf. Die kompaktere Deckschicht trägt zu einer höheren mechanischen Stabilität des Vliesverbundmaterials bei.

In einer bevorzugten Ausführungsform der Erfindung beträgt das Flächengewicht der Kernschicht etwa 600 g/m². Es hat sich gezeigt, dass die Kernschicht bei diesem Flächengewicht gute dämpfende Eigenschaften und eine ausreichende Stabilität aufweist.

In einer besonders bevorzugten Ausführungsform ist vorgesehen, dass das Flächengewicht der mindestens einen Deckschicht etwa 200 g/m² beträgt. Bei diesem Flächengewicht der mindestens einen Deckschicht können gewünschte Deckschichtdicke und Deckschichtstabilität gut vereinbart werden.

Eine weitere Möglichkeit besteht darin, dass die Kernschicht und/oder die mindestens eine Deckschicht PET-Matrixfasern enthalten. Diese PET-Matrixfasern weisen eine gute Wärmestabilität auf und schmelzen daher auch bei der Wärmebehandlung nicht. Bei der Wärmebehandlung umhüllen die aufgeschmolzenen niedriger schmelzenden Komponenten der Bikomponentenfasem daher auch die PET-Matrixfasern, wodurch ein poröser Verbund erhalten wird und keine dichte Platte entsteht. Da die Bikomponentenfasern vorzugsweise ebenfalls aus PET- und Co-PET bestehen, wird ein polymereinheitlicher Aufbau des Vliesverbundmaterials erzielt, der eine leichtere Entsorgung bzw. ein leichteres Recycling ermöglicht. Zudem wird durch den Einsatz der PET-Fasem eine günstige Herstellung des Vliesverbundmaterials ermöglicht.

Gemäß einer Variante ist vorgesehen, dass die Kernschicht zu etwa 50 % amorphe Bikomponentenfasern und zu etwa 50 % PET-Matrixfasern enthält. Da die Kernschicht weniger Bikomponentenfasem enthält, entstehen bei der Wärmebehandlung weniger stoffschlüssige Verbindungsstellen. Die Kernschicht weist daher einen eher lockeren Verbund auf. Dies führt dazu, dass die Kernschicht weicher ist und gute Dämpfungs- bzw. Puffereigenschaften aufweist.

Eine weitere zweckmäßige Ausführungsform sieht vor, die mindestens eine Deckschicht zu etwa 70 % kristalline Bikomponentenfasem und zu etwa 30 % PET-Matrixfasern enthält. Der Anteil der Bikomponentenfasem in der Deckschicht ist daher relativ hoch. Dadurch entsteht ein dichterer Verbund in der Deckschicht, wodurch eine höhere Festigkeit und höhere Stabilität erreicht wird.

Zweckmäßigerweise liegt der Schmelzpunkt der niedriger schmelzenden Komponente der amorphen Bikomponentenfasem der Kernschicht bei etwa 110°C. Der Schmelzpunkt liegt damit über der im Fahrzeug zu erwarteten Maximaltemperatur von etwa 95°C. Auch bei Erreichen dieser maximalen Temperatur bleibt die Kernschicht fest und verformt sich nicht. Zudem wird eine günstigere Herstellung ermöglicht, da die amorphen Bikomponentenfasern günstiger sind als kristalline Bikomponentenfasern.

Der Schmelzpunkt der niedriger schmelzenden Komponente der kristallinen Bikomponentenfasern der Deckschicht beträgt vorzugsweise etwa 165°C. Der Schmelzpunkt der niedriger schmelzenden Komponenten der kristallinen Bikomponentenfasem liegt daher deutlich über der im Autoinnenraum maximal zu erwartenden Temperatur von 95°C. Eine Verformung der Deckschichten kann daher auch bei Erreichen dieser Maximaltemperatur ausgeschlossen werden, die Deckschichten führen daher zu einer zusätzlichen Stabilisierung der Kernschicht und verhindern einen Wärmedurchhang eines Autodachhimmels auch bei maximalen Temperaturen.

Zweckmäßigerweise beträgt die Faserfeinheit der amorphen Bikomponentenfasem etwa 4,4 dtex. Die amorphen Bikomponentenfasem sind daher eher fein und ermöglichen dadurch ein geringeres Raumgewicht der Kernschicht.

Die Faserfeinheit der kristallinen Bikomponentenfasem kann etwa 7,0 dtex betragen. Die kristallinen Bikomponentenfasem sind daher gröber und tragen somit zu einer höheren Stabilität der Deckschicht bei.

Eine zweckmäßige Ausführungsform sieht vor, dass die Einstichdichte pro Seite des vernadelten Vliesverbundmaterials im Bereich von 80 bis 130 ET/cm² liegt. Versuche haben gezeigt, dass mit diesen Werten der Einstichdichte ein besonders geeignetes und stabiles Vliesverbundmaterial hergestellt werden kann.

Eine Variante sieht vor, dass die Kernschicht aus einem vorvernadelten Vliesmaterial besteht. Die Kernschicht weist daher bereits vor der Verbindung mit den Deckschichten Eigenstabilität und Eigensteifigkeit auf.

Bevorzugterweise liegt dabei die Einstichdichte der vernadelten Kernschicht im Bereich von 50 bis 120 ET/cm² und beträgt besonders bevorzugt 85 ET/cm². In Versuchen hat sich gezeigt, dass mit diesen Einstellungen ein besonders geeigneter Vlies hergestellt werden kann. Wenn die Vemadelung des Vlieses gleichzeitig von beiden Seiten, d.h. von oben und von unten erfolgt, beträgt die Einstichdichte pro Seite vorzugsweise in etwa 43 ET/cm².

Darüber hinaus bezieht sich die Erfindung auch auf ein Verfahren zur Herstellung eines vorstehend beschriebenen Vliesverbundmaterials. Das Verfahren umfasst die folgenden Schritte:
Bereitstellen einer Kernschicht, die zumindest teilweise amorphe Bikomponentenfasern mit einer niedriger schmelzenden Komponente und einer höher schmelzenden Komponente enthält,
Aufbringen einer Deckschicht, die zumindest teilweise kristalline Bikomponentenfasem mit einer niedriger schmelzenden Komponente und einer höher schmelzenden Komponente enthält, auf mindestens einer Seite der Kernschicht,
Vernadeln der mindestens einen Deckschicht mit der Kernschicht,
Erwärmen der vernadelten Schichten auf eine Temperatur oberhalb des Schmelzpunktes der niedriger schmelzenden Komponente der Bikomponentenfasem,
Abkühlen des Verbundmaterials.

Durch dieses Verfahren kann auf einfache Weise ein Vliesverbundmaterial hergestellt werden, das im Innenraum von Fahrzeugen, beispielsweise als automobiler Dachhimmel, zum Einsatz kommt. Beim Erwärmen der vernadelten Schichten schmelzen die niedriger schmelzenden Komponenten der Bikomponentenfasem auf und verbinden sich mit benachbarten Fasern. Dadurch kann eine gute Verbindung der Fasern untereinander ohne Zusatz von Klebstoffen erreicht werden. Da die höher schmelzenden Komponenten der Bikomponentenfasern fest bleiben, bleibt die Netzstruktur des Vliesmaterials bestehen. Durch den Verzicht auf Klebstoff kann sichergestellt werden, dass das Vliesmaterial nahezu keine Emissionen abgibt, beispielsweise in Form von Geruch oder Fogging. Durch die Verbindung von amorphen Bikomponentenfasem und kristallinen Bikomponentenfasem wird eine gute mechanische Festigkeit des Vliesverbundmaterials erzielt, die zu guter Steifigkeit führt, einen geringen Wärmedurchhang bewirkt und trotzdem gute Akustikeigenschaften des Materials garantiert.

Bevorzugterweise werden die miteinander vernadelten Schichten bei der Herstellung des Vliesverbundmaterials auf eine Temperatur von etwa 185°C erwärmt. Diese Temperatur liegt über dem Schmelzpunkt der niedriger schmelzenden Komponente der kristallinen Bikomponentenfasern. Dadurch wird erreicht, dass auch die niedriger schmelzenden Komponenten der kristallinen Bikomponentenfasem bei der Wärmebehandlung schmelzen und dadurch eine innige Verbindung zwischen der Kernschicht und der mindestens einen Deckschicht entsteht.

Eine Variante sieht vor, dass auf beiden Seiten der Kernschicht mindestens eine Deckschicht aufgebracht wird. Dadurch wird eine Sandwichstruktur des Vliesverbundmaterials mit verbesserten mechanischen Eigenschaften erreicht.

Eine weitere bevorzugte Ausbildung sieht vor, dass die Kernschicht vor der Zusammensetzung des Vliesverbundmaterials vernadelt wird. Dadurch wird bereits eine gute Verbindung und damit eine hohe Steifigkeit des Kernmaterials erzielt.

Es kann auch vorgesehen werden, dass die mindestens eine Deckschicht und die Kernschicht nach dem Erwärmen miteinander verpresst werden. Die teilweise aufgeschmolzenen Bikomponentenfasern kommen dann besonders gut mit benachbarten Fasern in Kontakt, so dass eine gute Verbindung zwischen Kernschicht und der mindestens einen Deckschicht erreicht wird.

Es kann auch vorgesehen werden, dass das Vliesverbundmaterial nach dem Erwärmen kalandriert wird. Dadurch wird eine glatte, optisch ansprechende Oberfläche des Vliesverbundmaterials erzielt.

Weiterhin bezieht sich die Erfindung auch auf ein Verfahren zur Herstellung eines Formteils aus dem oben beschriebenen Vliesverbundmaterial. Das Verfahren ist durch die folgenden Schritte gekennzeichnet:
Erwärmen des Vliesverbundmaterials auf etwa 200°C,
Einbringen des erhitzten Vliesverbundmaterials in eine temperierte Form,
Formen des Vliesverbundmaterials.

Auf diese Weise kann aus dem Vliesverbundmaterial beispielsweise ein automobiler Dachhimmel gefertigt werden. Das Vliesverbundmaterial passt sich gut an die Kontur der Form an, auch bei kleinen Radien. Durch die Sandwichstruktur des Vliesverbundmaterials hat der automobile Dachhimmel die gewünschten Eigenschaften, wie gute mechanische Stabilität, gute akustische Wirksamkeit und Dimensionsstabilität auch nach thermischer Belastung.

Im Folgenden werden Ausführungsformen der Erfindung näher erläutert. Es zeigen:
- Fig. 1: Schnitt durch das Vliesverbundmaterial,
- Fig. 2: Schnitt durch eine Bikomponentenfaser des Kern-Manteltyps,
- Fig. 3: Vergrößerung von miteinander verklebten Bikomponentenfasem und PET-Matrixfasem
- Fig. 4: Anlage zur Herstellung eines Vliesverbundmaterials.

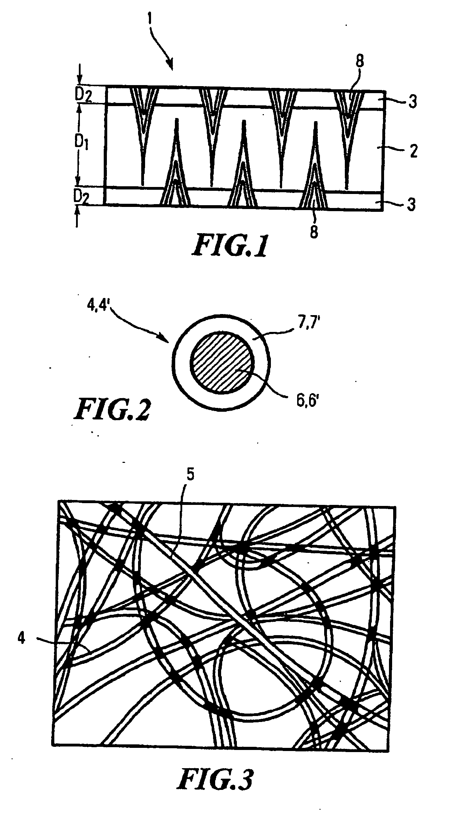

In Fig. 1 ist ein Schnitt durch ein Vliesverbundmaterial 1 dargestellt. Das Vliesverbundmaterial 1 weist eine Kernschicht 2 und zwei Deckschichten 3 auf. Es kann aber auch nur eine Deckschicht vorgesehen werden oder mehrere Deckschichten auf jeder Seite der Kernschicht 2. Die Dicke D₁ der Kernschicht 2 ist größer als die Dicke D₂ einer Deckschicht 3. Das Vliesverbundmaterial 1 hat vorzugsweise eine Dicke von etwa 7 mm und ein Flächengewicht von etwa 700 bis 1000 g/m², besonders bevorzugt 1000 g/m².

Die Kernschicht 2 und die Deckschichten 3 sind miteinander vernadelt, so dass Fasern 8 aus den Deckschichten 3 in die Kernschicht 2 hinein ragen bzw. in die Kernschicht 2 eingearbeitet sind. Das Vernadeln erfolgt von beiden Seiten des Vliesverbundmaterials 1, wobei die Einstichdichte pro Seite im Bereich von 80 bis 130 ET/cm² liegt. Zum Vernadeln werden Nadeln mit Kerben bzw. Widerhaken eingesetzt. Die Anzahl der Verbindungsstellen und die Eindringtiefe sind dabei durch die Einstellungen an der Nadelmaschine beeinflussbar. Bei gleichbleibender Transportgeschwindigkeit kann die Anzahl der Verbindungsstellen, also die Einstichdichte, durch Veränderung der Hubzahl variiert werden. Die Eindringtiefe der Fasern 8 in die Kemschicht 2 kann über die Einstichtiefe gesteuert werden. Die Anzahl der Fasern pro Einstich, bzw. die Größe der Faserbüschel, wird durch die Eigenschaften der verwendeten Nadeln, wie Anzahl der Kerben, Ausformung der Kerben, etc. beeinflusst. Es hat sich gezeigt, dass besonders die folgenden Nadeltypen der Firma Groz Beckert bzw. Kombinationen daraus zum Vernadeln des Vliesverbundmaterials 1 geeignet sind: 15x18x38x3 R 333 G 2007; 15x18x38x3 C 222 G 3027; 15x18x36x3 C 333 G 3017.

Die Kernschicht 2 besteht vorzugsweise aus einem vorvernadelten Vliesmaterial. Die Einstichdichte des vorvernadelten Vliesmaterials liegt dabei bevorzugt im Bereich von 50 bis 120 ET/cm², besonders bevorzugt beträgt die Einstichdichte 85 ET/cm². Da das Vernadeln üblicherweise von oben und von unten gleichmäßig erfolgt, beträgt die Einstichdichte pro Seite daher etwa 43 ET/cm². Beispielsweise können dafür Nadeln der Firma Groz Beckert mit der Bezeichnung 15x18x38x3 C 222 G 3027 eingesetzt werden. Das Flächengewicht der Kemschicht beträgt etwa 600 g/m². Das Raumgewicht der Kernschicht 2 beträgt etwa 100 kg/m³.

Durch den Einsatz von Spezialnadeln, die nur eine Kerbe aufweisen ist es möglich, dickere Kemschichten herzustellen. In diesem Fall beträgt die Einstichdichte der Kemschicht etwa 100 bis 150 ET/cm², besonders bevorzugt 135 ET/cm². Geeignet dafür sind Nadeln der Firma Groz Beckert mit der Bezeichnung 15x17x36x3,5 C 001 G 53017.

Im bevorzugten Ausführungsbeispiel enthält die Kemschicht 2 zu etwa 50 % PET-Matrixfasern 5 und zu etwa 50 % Co-PET/PET-Bikomponentenfasern 4. Die Faserfeinheit der PET-Matrixfasern 5 beträgt etwa 6,7 dtex, die Faserfeinheit der Bikomponentenfasem 4 beträgt etwa 4,4 dtex. Die Matrixfasern 5 sind also wesentlich gröber als die Bikomponentenfasem 4. Bei den eingesetzten Bikomponentenfasem 4 handelt es sich vorzugsweise um Bikomponentenfasem des Kem-Mantel-Typs. Ein Querschnitt durch eine solche Bikomponentenfaser 4 ist in Fig. 2 dargestellt. Die Bikomponentenfaser 4 umfasst einen Kern 6 aus einer höher schmelzenden Komponente, der von einer Hülle 7 aus einer niedriger schmelzenden Komponente umgeben ist. Bei den in der Kemschicht 2 enthaltenen Bikomponentenfasem 4 handelt es sich vorzugsweise um amorphe Bikomponentenfasern. Die Schmelztemperatur der Hülle 7 der amorphen Bikomponentenfasern 4 beträgt etwa 110°C, die Schmelztemperatur des Kerns 6 der amorphen Bikomponentenfasem 4 beträgt etwa 255°C.

Bei den auf der Kemschicht 2 angeordnete Deckschichten 3 handelt es sich um unverfestigte Faserflorlagen. Diese Faserflorlagen enthalten zu etwa 70 % Bikomponentenfasem 4' und zu etwa 30 % PET-Matrixfasern 5. Das Flächengewicht der Deckschichten 2 beträgt etwa 200 g/m². Die Deckschichten 3 weisen ein höheres Raumgewicht als die Kemschicht 2 auf. Das Raumgewicht der Deckschichten beträgt etwa 200 kg/m³.

Auch die in der Deckschichten 3 enthaltenen Bikomponentenfasem 4' bestehen aus Co-PET/PET. Allerdings werden in den Deckschichten 3 bevorzugt kristalline Bikomponentenfasern 4' eingesetzt. Das Material des Kerns 6' dieser kristallenen Bikomponentenfasern 4' ist dasselbe, wie das des Kerns 6 der amorphen Bikomponentenfasem 4 in der Kemschicht 2, so dass die Schmelztemperatur des Kerns 6' der kristallinen Bikomponentenfasem ebenfalls etwa 255°C beträgt. Die Schmelztemperatur der Hülle 7' der kristallinen Bikomponentenfasem 4' in der Deckschicht 3 beträgt etwa 165°C. Die Faserfeinheit der kristallinen Bikomponentenfasem 4' in der Deckschicht 3 beträgt etwa 7,0 dtex. Diese kristallenen Bikomponentenfasem 4' sind also gröber als die in der Kernschicht 2 eingesetzten Bikomponentenfasem 4. Die PET-Matrixfasern 5 in den Deckschichten 3 entsprechen den PET-Matrixfasern 5 in der Kemschicht 2. Diese PET-Matrixfasern 5 haben daher ebenfalls eine Faserfeinheit von etwa 6,7 dtex.

Die Kemschicht 2 und die Deckschichten 3 sind stoffschlüssig miteinander verbunden. Dies geschieht beispielsweise dadurch, dass das Vliesverbundmaterial 1 einer Wärmebehandlung unterzogen wird. Bei der Erwärmung auf eine Temperatur oberhalb der Schmelzpunkte der niedriger schmelzenden Komponenten der Bikomponentenfasem 4, 4' schmelzen die Hüllen 7, 7' der Bikomponentenfasern 4, 4' auf und verbinden sich mit dazu benachbart angeordneten Bikomponentenfasern 4, 4' oder PET-Matrixfasern 5. In Fig. 3 sind die stoffschlüssigen Verbindungen zwischen den Bikomponentenfasern 4, 4' und benachbart dazu angeordnete Bikomponentenfasem 4, 4' bzw. PET-Matrixfasern 5 als dunkle Stellen dargestellt.

Das Vliesverbundmaterial 1 weist also eine Sandwichstruktur auf, mit einer innen liegenden Kernschicht 2, die von zwei Deckschichten 3 umgeben wird. Die Kernschicht 2 ist dicker als die Deckschichten 3, weist aber ein geringeres Raumgewicht auf. Die Deckschichten 3 sind relativ dünn, haben aber ein höheres Raumgewicht. Aus den Deckschichten 3 ragen Fasern 8 säulenartig in die Kernschicht 2 und sind mit dieser stoffschlüssig verbunden. Da die Deckschichten 3 vorzugsweise kristalline Bikomponentenfasem 4' umfassen, sind diese Fasersäulen 8 relativ steif. Die Kernschicht 2 umfasst vorzugsweise amorphe Bikomponentenfasem 4 mit einer geringeren Faserfeinheit. Die Kernschicht 2 ist daher eher weich. Durch die Fasern 8 wird die Kernschicht 2 immobilisiert und versteift, vor allem auch gegenüber Druckbelastungen. Es entsteht eine schubsteife Verbindung zwischen der Kernschicht 2 und den Deckschichten 3.

Durch die schubsteife Verbindung zwischen Kemschicht 2 und Deckschichten 3 hat das Vliesverbundmaterial 1 eine hohe Biegesteifigkeit, Zugfestigkeit und Schlagzähigkeit. Da das Vliesverbundmaterial 1 eine netzartige Struktur mit vielen Grenzflächen aufweist, ist seine akustische Wirksamkeit relativ hoch. Das Vliesverbundmaterial 1 ist daher besonders für den Einsatz im Innenraum eines Fahrzeugs geeignet, da es eine gute Schalldämpfung ermöglicht. Da das Vliesverbundmaterial 1 nicht über zusätzliche Klebstoffe verbunden werden muss, wird die Geruchsneigung und das Fogging reduziert. Durch den Einsatz von kristallinen Bikomponentenfasem 4' mit einem hohen Schmelzpunkt der niedriger schmelzenden Komponente 7' in den Deckschichten 3 kann eine hohe Dimensionsstabilität des Vliesmaterials bei thermischer Belastung erreicht werden.

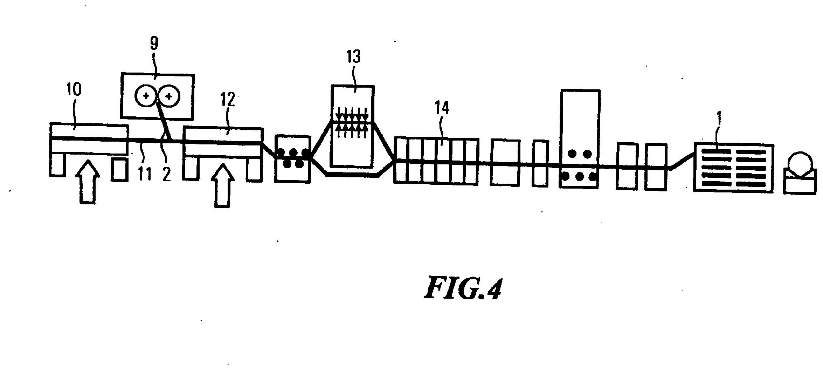

Die Herstellung des Vliesverbundmaterials 1 kann beispielsweise mit der in Fig. 4 dargestellten Anlage erfolgen. In einem ersten Schritt wird die vorvernadelte Kemschicht 2 hergestellt. Dabei werden amorphe Bikomponentenfasem 4 und PET-Matrixfasern 5 in einer Nadelmaschine vernadelt, wobei die Einstichdichte des vorvernadelten Materials im Bereich von 50 bis 120 ET/cm² liegt und besonders bevorzugt 85 ET/cm² beträgt. Durch eine Veränderung der Transportgeschwindigkeit des Vliesmaterials und der Hubzahl der Nadeln kann die Einstichdichte verändert werden. Das vorvernadefte Kernschichtmaterial hat eine Höhe von etwa 8 mm und ein Flächengewicht von etwa 600 g/m². Es ist aber auch möglich eine dickere Kemsschicht 3 herzustellen, indem Spezialnadeln verwendet werden und eine höhere Einstichdichte von etwa 100 bis 150 ET/cm², vorzugsweise 135 ET/cm² verwendet wird.

Die vernadelte Kemschicht 2 wird auf einer Abwickelstation 9 bereitgestellt. Über einen ersten Leger 10 wird eine erste unverfestigte Faserflorschicht 11 aus kristallinen Bikomponentenfasern 4' und PET-Matrixfasern 5 bereitgestellt, die die erste Deckschicht 3 ausbildet. Auf diese erste Deckschicht 3 wird über die Abwickelstation 9 das vorvernadelte Kernmaterial 2 aufgebracht. In einem zweiten Leger 12 wird auf die Kemschicht 2 die zweite Deckschicht 3 aufgebracht. Diese zweite Deckschicht 3 ist wiederum ein unverfestigter Faserflor aus kristallinen Bikomponentenfasern 4' und PET-Matrixfasern 5. Die aufeinander liegenden Schichten werden in eine Nadelmaschine 13 geführt und miteinander vernadelt, so dass Fasern 8 aus den Deckschichten 3 in die Kemschicht 2 gezogen und in diese eingearbeitet werden. Im Anschluss an die Nadelmaschine 13 durchläuft das vernadelte Verbundmaterial einen Trockner 14, indem das Verbundmaterial auf eine Temperatur von etwa 185°C erwärmt wird. Dadurch wird sowohl die niedriger schmelzende Komponente der amorphen Bikomponentenfasem 4 der Kemschicht 2 als auch die niedriger schmelzende Komponente der kristallinen Bikomponentenfasem 4' der Deckschichten 3 geschmolzen. Die Hüllen der Bikomponentenfasem 4,4' schmelzen also auf und legen sich um benachbarte Fasern 4, 4', 5. Dadurch verbinden sich die Bikomponentenfasern 4, 4', vor allem auch die aus den Deckschichten 3 in die Kemschicht 2 ragenden Fasern 8, mit den umgebenden Materialien. Um eine gute Verbindung der Fasem zu gewährleisten, kann das Vliesmaterial 1 nach dem Erwärmen verpresst werden.

Im Anschluss an den Trockner 14 wird das Vliesverbundmaterial 1 abgekühlt, so dass die Schmelzen wieder erstarren. Die Fasern 8 werden durch die Kristallinität der verwendeten Bikomponentenfasem 4' steif und imobilisieren bzw. versteifen gerüstartig die Kemschicht 2. Das entstandene Vliesverbundmaterial 1 ist ein Dreilagenverbund mit extrem guter Lagenhaftung. Das Flächengewicht des Vliesverbundmaterials beträgt vorzugsweise 1000 g/m², die Dicke beträgt etwa 7 mm. Das Vliesverbundmaterial 1 kann dann über Kalander geglättet werden. Das fertig verpresste und abgekühlte Vliesmaterial 1 wird in Platten geschnitten und gelagert.

Zur Herstellung von Innenverkleidungen von Fahrzeugen, beispielsweise automobilen Dachhimmeln, aus dem Vliesverbundmaterial 1 wird das Vliesverbundmaterial 1 auf eine Temperatur von 200°C erhitzt. Das erhitzte Material 1 wird in eine temperierte Form 2 eingebracht. Die Temperatur der Form beträgt dabei etwa 80°C. In der Form wird das Vliesverbundmaterial 1 in die gewünschte Form gebracht. Da das Vliesverbundmaterial 1 auf eine Temperatur oberhalb der Schmelzpunkte der niedriger schmelzenden Komponenten 7, T der amorphen Bikomponentenfasem 4 und der kristallinen Bikomponentenfasem 4' gebracht wird, liegen diese im geschmolzenen Zustand vor. Das Vliesmaterial 1 passt sich daher sehr gut an die Kontur der Form an, insbesondere bei kleinen Radien oder kleinen Details. Beim Abkühlen verfestigt sich das Vliesverbundmaterial 1 in der vorgegebenen Form.

An einem fertigen Dachhimmel anliegende Druck- oder Zugbeanspruchungen verteilen sich nun nicht mehr entlang der Oberfläche des Formteils sondern werden gezielt auch von der inneren Schicht des Formteils aufgenommen. Es kann weiterhin festgestellt werden, dass das Vliesverbundmaterial in der Form eine gute Passgenauigkeit hat und daher eine gute Ausformung und eine gute Werkzeugfüllung ermöglicht. Zudem kann die Faltenbildung bei der Verformung im Werkzeug verringert werden.

### Bezugszeichenliste

1 = Vliesverbundmaterial
2 = Kemschicht
3 = Deckschicht
4 = amorphe Bikomponentenfasem
4'= kristalline Bikomponentenfasem
5 = PET-Matrixfasern
6 = höher schmelzende Komponente der amorphen Bikomponentenfasern (4)
6' = höher schmelzende Komponente der kristallinen Bikomponentenfasem (4')
7 = niedriger schmelzende Komponente der amorphen Bikomponentenfasem (4)
7' = niedriger schmelzende Komponente der kristallinen Bikomponentenfasern (4')
8 = Fasern, die aus der Deckschicht (3) in die Kemschicht (2) ragen
9 = Abwickelstation
10 = erster Leger
11 = erste unverfestigte Faserflorschicht
12 = zweiter Leger
13 = Nadelmaschine
14 = Trockner
D₁ = Dicke der Kernschicht (2)
D₂ = Dicke der Deckschicht (3)

## Patentansprüche

1. Mehrlagiges Vliesvertiundmaterial (1) mit einer Kemschicht (2) und mindestens einer mit der Kernschicht (2) verbundenen Deckschicht (3), wobei die mindestens eine Deckschicht (3) mit der Kemschicht (2) vemadelt ist, so dass Fasern (8) der mindestens einen Deckschicht (3) in die Kemschicht (2) ragen, **dadurch gekennzeichnet, dass** die Deckschicht (3) sowie die aus der Deckschicht (3) in die Kemschicht (2) ragenden Fasern (8) zumindest teilweise stoffschlüssig mit der Kemschicht (2) verbunden sind, wobei die Kemschicht (2) amorphe Bikomponentenfasern (4) mit einer niedriger schmelzenden Komponente (7) und einer höher schmelzenden Komponente (6) enthält und die mindestens eine Deckschicht (3) kristalline Bikomponentenfasem (4') mit einer niedriger schmelzenden Komponente (7') und einer höher schmelzenden Komponente (6') enthält.

2. Vliesverbundmaterial (1) nach Anspruch 1, **dadurch gekennzeichnet, dass** auf beiden Seiten der Kemschicht (2) mindestens eine Deckschicht (3) angeordnet ist.

3. Vliesverbundmaterial (1) nach Anspruch 1 oder 2, **dadurch gekennzeichnet, dass** die stoffschlüssige Verbindung zwischen der Kemschicht (2) und der mindestens einen Deckschicht (3) sowie den aus der mindestens einen Deckschicht (3) in die Kemschicht (2) ragenden Fasern (8) durch eine Wärmebehandlung entsteht.

4. Vliesverbundmaterial (1) nach einem der Ansprüche 1 bis 3, **dadurch gekennzeichnet, dass** die niedriger schmelzenden Komponenten (7, 7') der Bikomponentenfasem (4, 4') benachbarte Fasern (4, 4', 5) der Kemschicht (2) und/oder der mindestens einen Deckschicht (3) zumindest teilweise umhüllen.

5. Vliesverbundmaterial (1) nach einem der Ansprüche 1 oder 2, **dadurch gekennzeichnet, dass** die Dicke (D₁) der Kemschicht (2) größer ist als die Dicke (D₂) der mindestens einen Deckschicht (3).

6. Vliesverbundmaterial (1) nach einem der Ansprüche 1 bis 5, **dadurch gekennzeichnet, dass** das Flächengewicht der Kernschicht (2) größer ist als das Flächengewicht der mindestens einen Deckschicht (3).

7. Vliesverbundmaterial (1) nach einem der Ansprüche 1 bis 6, **dadurch gekennzeichnet, dass** das Raumgewicht der Kemschicht (2) kleiner ist als das Raumgewicht der mindestens einen Deckschicht (3).

8. Vliesverbundmaterial (1) nach einem der Ansprüche 1 bis 7, **dadurch gekennzeichnet, dass** das Flächengewicht der Kemschicht (2) im Bereich von 500 - 800 g/m² liegt.

9. Vliesverbundmaterial (1) nach einem der Ansprüche 1 bis 7, **dadurch gekennzeichnet, dass** das Flächengewicht der mindestens einen Deckschicht (3) im Bereich von 150 - 250 g/m² liegt.

10. Vliesverbundmaterial (1) nach einem der Ansprüche 1 bis 9, **dadurch gekennzeichnet, dass** die Kernschicht (2) und/oder die mindestens eine Deckschicht (3) PET-Matrixfasern (5) enthalten.

11. Vliesverbundmaterial (1) nach einem der Ansprüche 1 bis 10, **dadurch gekennzeichnet, dass** die Kernschicht (2) zu etwa 50 % amorphe Bikomponentenfasem (4) und zu etwa 50 % PET-Matrixfasern (5) enthält.

12. Vliesverbundmaterial (1) nach einem der Ansprüche 1 bis 10, **dadurch gekennzeichnet, dass** die mindestens eine Deckschicht (3) zu etwa 70 % kristalline Bikomponentenfasern (4') und zu etwa 30 % PET-Matrixfasern (5) enthält.

13. Vliesverbundmaterial (1) nach einem der Ansprüche 1 bis 11, **dadurch gekennzeichnet, dass** der Schmelzepunkt der niedriger schmelzenden Komponente (7) der amorphen Bikomponentenfasern (4) der Kernschicht (2) bei etwa 110°C liegt.

14. Vliesverbundmaterial (1) nach einem der Ansprüche 1 bis 12, **dadurch gekennzeichnet, dass** der Schmelzpunkt der niedriger schmelzenden Komponente (T) der kristallinen Bikomponentenfasem (4') der mindestens einen Deckschicht (3) etwa 165°C beträgt.

15. Vliesverbundmaterial (1) nach einem der Ansprüche 1 bis 14, **dadurch gekennzeichnet, dass** die amorphen Bikomponenfenfasern (4) eine Faserfeinheit von etwa 4,4 dtex haben.

16. Vliesverbundmaterial (1) nach einem der Ansprüche 1 bis 14, **dadurch gekennzeichnet, dass** die kristallinen Bikomponentenfasem (4') eine Faserfeinheit von etwa 7,0 dtex haben.

17. Vliesverbundmaterial (1) nach einem der Ansprüche 1 bis 16, **dadurch gekennzeichnet, dass** die Einstichdichte pro Seite des vemadelten Vliesverbundmaterials (1) im Bereich von 80 bis 130 ET/cm² liegt.

18. Vliesverbundmaterial (1) nach einem der Ansprüche 1 bis 17, **dadurch gekennzeichnet, dass** die Kernschicht (2) aus einem vorvernadelten Vliesmaterial besteht.

19. Vliesverbundmaterial (1) nach Anspruch 18, **dadurch gekennzeichnet, dass** die Einstichdichte der vernadelten Kernschicht (2) im Bereich von 50 bis 120 ET/cm² liegt und bevorzugt 85 ET/cm² beträgt.

20. Verfahren zur Herstellung eines Vliesverbundmaterials (1) nach einem der Ansprüche 1 bis 19, **gekennzeichnet durch** die folgenden Schritte:
Bereitstellen einer Kernschicht (2), die zumindest teilweise amorphe Bikomponentenfasem (4) mit einer niedriger schmelzenden Komponente (7) und einer höher schmelzenden Komponente (6) enthält,
Aufbringen einer Deckschicht (3), die zumindest teilweise kristalline Bikomponentenfasern (4') mit einer niedriger schmelzenden Komponente (7') und einer höher schmelzenden Komponente (6') enthält, auf mindestens einer Seite der Kemschicht (2),
Vernadeln der mindestens einen Deckschicht (3) mit der Kernschicht (2),
Erwärmen der vemadelten Schichten (2, 3) auf eine Temperatur oberhalb des Schmelzpunkts der niedriger schmelzenden Komponente (7, 7') der Bikomponentenfasern (4, 4'),
Abkühlen des Vliesverbundmaterials (1).

21. Verfahren nach Anspruch 20, **dadurch gekennzeichnet, dass** die vemadelten Schichten (2, 3) auf eine Temperatur von etwa 185°C erwärmt werden.

22. Verfahren nach einem der Ansprüche 20 oder 21, **dadurch gekennzeichnet, dass** auf beiden Seiten der Kernschicht (2) mindestens eine Deckschicht (3) aufgebracht wird.

23. Verfahren nach einem der Ansprüche 20 bis 22, **dadurch gekennzeichnet, dass** die Kernschicht (2) vor der Zusammensetzung des Vliesverbundmaterials (1) vernadelt wird.

24. Verfahren nach einem der Ansprüche 20 bis 23, **dadurch gekennzeichnet, dass** die mindestens eine Deckschicht (3) und die Kernschicht (2) nach dem Erwärmen miteinander verpresst werden.

25. Verfahren nach einem der Ansprüche 20 bis 24, **dadurch gekennzeichnet, dass** das Vliesverbundmaterial (1) nach dem Erwärmen kalandriert wird.

26. Verfahren zur Herstellung eines Formteils aus einem Vliesverbundmaterial (1) nach einem der Ansprüche 1 bis 19, **gekennzeichnet durch** die folgenden Schritte:
Erwärmen des Vliesverbundmaterials (1) auf etwa 200°C.
Einbringen des erhitzten Vliesverbundmaterials (1) in eine temperierte Form,
Formen des Vliesverbundmaterials (1).

## Claims

1. Multilayered non-woven composite material (1) with a core layer (2) and at least one cover layer (3) bonded with the core layer (2) whereby at least one cover layer (3) is joined by needlepunching with the core layer (2), so that fibres (8) of at least one cover layer (3) jut into the core layer (2),
**characterised in that** the cover layer (3) as well as the fibres (8) jutting out from the cover layer (3) into the core layer (2) are at least partially firmly bonded with the core layer (2), whereby the core layer (2) contains amorphous bicomponent fibres (4) with a low-temperature melting component (7) and a high-temperature melting component (6) and at least one cover layer (3) contains crystalline bicomponent fibres (4') with a low-temperature melting component (7') and a high-temperature melting component (6').

2. Non-woven composite material (1) according to Claim 1, **characterised in that** at least one cover layer (3) is disposed on both sides of the core layer (2).

3. Non-woven composite material (1) according to Claim 1 or 2, **characterised in that** the firm material bond between the core layer (2) and at least one cover layer (3) as well as the fibres (8) jutting out from at least one cover layer (3) into the core layer (2) occurs through thermal treatment.

4. Non-woven composite material (1) according to one of Claims 1 to 3,
**characterised in that** the low-temperature melting components (7, 7') of the bicomponent fibres (4, 4') at least partially enwrap neighbouring fibres (4, 4', 5) of the core layer (2) and/or at least one cover layer (3).

5. Non-woven composite material (1) according to one of Claims 1 or 2,
**characterised in that** the thickness (D₁) of the core layer (2) is greater than the thickness (D₂) of at least one cover layer (3).

6. Non-woven composite material (1) according to one of Claims 1 to 5,
**characterised in that** the weight per unit area of the core layer (2) is greater than the weight per unit area of at least one cover layer (3).

7. Non-woven composite material (1) according to one of Claims 1 to 6,
**characterised in that** the volume weight of the core layer (2) is smaller than the volume weight of at least one cover layer (3).

8. Non-woven composite material (1) according to one of Claims 1 to 7,
**characterised in that** the weight per unit area of the core layer (2) is within the range of 500 - 800 g/m².

9. Non-woven composite material (1) according to one of Claims 1 to 7,
**characterised in that** the weight per unit area of at least one cover layer (3) is within the range of 150 - 250 g/m².

10. Non-woven composite material (1) according to one of Claims 1 to 9,
**characterised in that** the core layer (2) and/or at least one cover layer (3) contains PET matrix fibres (5).

11. Non-woven composite material (1) according to one of Claims 1 to 10,
**characterised in that** the core layer (2) contains approximately 50% amorphous bicomponent fibres (4) and approximately 50% PET matrix fibres (5).

12. Non-woven composite material (1) according to one of Claims 1 to 10,
**characterised in that** at least one cover layer (3) contains approximately 70% crystalline bicomponent fibres (4') and approximately 30% PET matrix fibres (5).

13. Non-woven composite material (1) according to one of Claims 1 to 11,
**characterised in that** the melting point of the low-temperature melting component (7) of the amorphous bicomponent fibres (4) of the core layer (2) is approximately 110°C.

14. Non-woven composite material (1) according to one of Claims 1 to 12,
**characterised in that** the melting point of the low-temperature melting component (7') of the crystalline bicomponent fibres (4') of at least one cover layer (3) is approximately 165°C.

15. Non-woven composite material (1) according to one of Claims 1 to 14,
**characterised in that** the amorphous bicomponent fibres (4) have a fibre count of approximately 4.4 dtex.

16. Non-woven composite material (1) according to one of Claims 1 to 14,
**characterised in that** the crystalline bicomponent fibres (4') have a fibre count of approximately 7.0 dtex.

17. Non-woven composite material (1) according to one of Claims 1 to 16,
**characterised in that** the penetration density per side of the needlepunched non-woven composite material (1) is within the range of 80 to 130 ET/cm².

18. Non-woven composite material (1) according to one of Claims 1 to 17, **characterised in that** the core layer (2) consists of a pre-needlepunched non-woven material.

19. Non-woven composite material (1) according to Claim 18, **characterised in that** the penetration density (ET) of the needlepunched core layer (2) is within the range of 50 to 120 ET/cm² and preferably 85 ET/cm².

20. Process for the manufacture of a non-woven composite material (1) according to one of Claims 1 to 19, **characterised by** the following steps:
provision of a core layer (2), which at least partially contains amorphous bicomponent fibres (4) with a low-temperature melting component (7) and a high-temperature melting component (6),
application of a cover layer (3), which at least partially contains crystalline bicomponent fibres (4') with a low-temperature melting component (7') and a high-temperature melting component (6') on at least one side of the core layer (2),
joining of at least one cover layer (3) with the core layer by needlepunching (2),
heating of needlepunched layers (2, 3) to a temperature above the melting point of the low-temperature melting component (7, 7') of the bicomponent fibres (4, 4'),
cooling down of the non-woven composite material (1).

21. Process according to Claim 20, **characterised in that** the needlepunched layers (2, 3) are heated to a temperature of approximately 185°C.

22. Process according to one of Claims 20 or 21, **characterised in that** at least one cover layer (3) is applied on both sides of the core layer (2).

23. Process according to one of Claims 20 to 22, **characterised in that** the core layer (2) is needlepunched before the composition of the non-woven composite material (1).

24. Process according to one of Claims 20 to 23, **characterised in that** at least one cover layer (3) and the core layer (2) are pressed together after heating.

25. Process according to one of Claims 20 to 24, **characterised in that** the non-woven composite material (1) is calendered after heating.

26. Process for the manufacture of a moulded form made of a non-woven composite material (1) according to one of Claims 1 to 19, **characterised by** the following steps:
heating of the non-woven composite material (1) to approximately 200° C,
introduction of the heated non-woven composite material (1) into a tempered mould;
moulding of the non-woven composite material (1).

## Revendications

1. Matériau composite en non-tissé (1) multicouche comportant une couche noyau (2) et au moins une couche de couverture (3) liée à la couche noyau (2), sachant qu'au moins une couche de couverture (3) est aiguilletée avec la couche noyau (2) de sorte que des fibres (8) de l'au moins une couche de couverture (3) font saillie dans la couche noyau (2), **caractérisé en ce que** la couche de couverture (3) ainsi que les fibres (8) faisant saillie dans la couche noyau (2) depuis la couche de couverture (3) sont liées au moins partiellement par adhérence des matières à la couche noyau (2), sachant que la couche noyau (2) contient des fibres amorphes (4) à deux composantes, l'une (7) fondant à une température inférieure et l'autre (6) fondant à une température supérieure, et **en ce que** l'au moins une couche de couverture (3) contient des fibres cristallines (4') à deux composantes, l'une (7') fondant à une température inférieure et l'autre (6') fondant à une température supérieure.

2. Matériau composite en non-tissé (1) selon la revendication 1, **caractérisé en ce qu'**au moins une couche de couverture (3) est agencée des deux côtés de la couche noyau (2).

3. Matériau composite en non-tissé (1) selon la revendication 1 ou 2, **caractérisé en ce que** la liaison par adhérence des matières entre la couche noyau (2) et l'au moins une couche de couverture (3) ainsi qu'entre les fibres (8) faisant saillie dans la couche noyau (2) depuis l'au moins une couche de couverture (3) est obtenue par un traitement thermique.

4. Matériau composite en non-tissé (1) selon l'une des revendications 1 à 3, **caractérisé en ce que** les composantes (7, 7') - fondant à une température inférieure - des fibres (4, 4') à deux composantes enveloppent au moins en partie des fibres (4, 4', 5) voisines de la couche noyau (2) et/ou de l'au moins une couche de couverture (3).

5. Matériau composite en non-tissé (1) selon l'une des revendications 1 ou 2, **caractérisé en ce que** l'épaisseur (D₁) de la couche noyau (2) est supérieure à l'épaisseur (D₂) d'au moins une couche de couverture (3).

6. Matériau composite en non-tissé (1) selon l'une des revendications 1 à 5, **caractérisé en ce que** le grammage par unité de surface de la couche noyau (2) est supérieur au grammage par unité de surface d'au moins une couche de couverture (3).

7. Matériau composite en non-tissé (1) selon l'une des revendications 1 à 6, **caractérisé en ce que** le grammage par unité de volume de la couche noyau (2) est inférieur au grammage par unité de volume d'au moins une couche de couverture (3).

8. Matériau composite en non-tissé (1) selon l'une des revendications 1 à 7, **caractérisé en ce que** le grammage par unité de surface de la couche noyau (2) se situe dans une plage comprise entre 500 et 800 g/m².

9. Matériau composite en non-tissé (1) selon l'une des revendications 1 à 7, **caractérisé en ce que** le grammage par unité de surface de l'au moins une couche de couverture (3) se situe dans une plage comprise entre 150 et 250 g/m².

10. Matériau composite en non-tissé (1) selon l'une des revendications 1 à 9, **caractérisé en ce que** la couche noyau (2) et/ou l'au moins une couche de couverture (3) contiennent des fibres de PET (5) agencées en matrice.

11. Matériau composite en non-tissé (1) selon l'une des revendications 1 à 10, **caractérisé en ce que** la couche noyau (2) contient environ 50 % de fibres amorphes (4) à deux composantes et environ 50 % de fibres de PET (5) agencées en matrice.

12. Matériau composite en non-tissé (1) selon l'une des revendications 1 à 10, **caractérisé en ce que** l'au moins une couche de couverture (3) contient environ 70 % de fibres cristallines (4') à deux composantes et environ 30 % de fibres de PET (5) agencées en matrice.

13. Matériau composite en non-tissé (1) selon l'une des revendications 1 à 11, **caractérisé en ce que** dans les fibres amorphes (4) à deux composantes constituant la couche noyau (2), le point de fusion de la composante (7) fondant à une température inférieure se situe à environ 110 °C.

14. Matériau composite en non-tissé (1) selon l'une des revendications 1 à 12, **caractérisé en ce que** dans les fibres cristallines (4') à deux composantes constituant l'au moins une couche de couverture (3), le point de fusion de la composante (7') fondant à une température inférieure se situe à environ 165 °C.

15. Matériau composite en non-tissé (1) selon l'une des revendications 1 à 14, **caractérisé en ce que** les fibres amorphes (4) à deux composantes présentent une finesse d'environ 4,4 dtex.

16. Matériau composite en non-tissé (1) selon l'une des revendications 1 à 14, **caractérisé en ce que** les fibres cristallines (4') à deux composantes présentent une finesse d'environ 7,0 dtex.

17. Matériau composite en non-tissé (1) selon l'une des revendications 1 à 16, **caractérisé en ce que** la densité de piqûres par côté du matériau composite (1) en non-tissé aiguilleté se situe dans une plage comprise entre 80 et 130 ET/cm².

18. Matériau composite en non-tissé (1) selon l'une des revendications 1 à 17, **caractérisé en ce que** la couche noyau (2) se compose d'un matériau non tissé pré-aiguilleté.

19. Matériau composite en non-tissé (1) selon la revendication 18, **caractérisé en ce que** la densité de piqûres que présente la couche noyau (2) aiguilletée se situe dans une plage comprise entre 50 et 120 ET/cm² et de préférence à 85 ET/cm².

20. Procédé pour fabriquer un matériau composite en non-tissé (1) selon l'une des revendications 1 à 19, **caractérisé par** les étapes suivantes :
la fourniture d'une couche noyau (2) constituée au moins en partie de fibres (4) à deux composantes en partie amorphes, dont l'une (7) fond à une température inférieure et l'autre (6) fond à une température supérieure,
l'application, sur au moins un côté de la couche noyau (2), d'une couche de couverture (3) constituée au moins en partie de fibres (4') à deux composantes en partie cristallines, dont l'une (7') fond à une température inférieure et l'autre (6') fond à une température supérieure,
l'aiguilletage de l'au moins une couche de couverture (3) avec la couche noyau (2), échauffement des couches aiguilletées (2, 3) jusqu'à une température supérieure au point de fusion de la composante (7, 7') - des fibres (4, 4') à deux composantes -fondant à une température inférieure,
le refroidissement du matériau composite (1) en non-tissé.

21. Procédé selon la revendication 20, **caractérisé en ce que** les couches (2, 3) aiguilletées sont échauffées jusqu'à une température d'environ 185 °C.

22. Procédé selon la revendication 20 ou 21, **caractérisé en ce qu'**au moins une couche de couverture (3) est appliquée des deux côtés de la couche noyau (2).

23. Procédé selon l'une des revendications 20 à 22, **caractérisé en ce que** la couche noyau (2) est aiguilletée avant d'assembler le matériau composite en non-tissé (1).

24. Procédé selon l'une des revendications 20 à 23, **caractérisé en ce que** l'au moins une couche de couverture (3) et la couche noyau (2) sont comprimées l'une contre l'autre après l'échauffement.

25. Procédé selon l'une des revendications 20 à 24, **caractérisé en ce que** le matériau composite en non-tissé (1) est calandré après l'échauffement.

26. Procédé de fabrication d'une pièce moulée en un matériau composite en non-tissé (1) selon l'une des revendications 1 à 19, **caractérisé par** les étapes suivantes :
l'échauffement du matériau composite en non-tissé (1) à environ 200°C,
l'introduction du matériau composite en non-tissé (1) échauffé dans un moule thermostatisé,
le moulage du matériau composite en non-tissé (1).
